Europäisches Patentamt

European Patent Office

Office européen des brevets

(11) Veröffentlichungsnummer: **0 214 481**
B1

(12) **EUROPÄISCHE PATENTSCHRIFT**

(45) Veröffentlichungstag der Patentschrift:
27.12.89

(51) Int. Cl.⁴: **F03B 11/04,** F01D 25/16

(21) Anmeldenummer: 86111009.6

(22) Anmeldetag: 09.08.86

(54) **Lageranordnung.**

(30) Priorität: 11.09.85 DE 3532456

(43) Veröffentlichungstag der Anmeldung:
18.03.87 Patentblatt 87/12

(45) Bekanntmachung des Hinweises auf die Patenterteilung:
27.12.89 Patentblatt 89/52

(84) Benannte Vertragsstaaten:
CH DE FR GB IT LI

(56) Entgegenhaltungen:
DE-C- 952 756
GB-A- 595 346
GB-A- 937 515
US-A- 3 756 672

(73) Patentinhaber: **MTU MOTOREN- UND TURBINEN-UNION MÜNCHEN GMBH, Dachauer Strasse 665 Postfach 50 06 40, D-8000 München 50(DE)**

(72) Erfinder: **Rohra, Alois, Bacher Strasse 45, D-8000 München 90(DE)**
Erfinder: **Wildner, Walter, Lierstrasse 29, D-8000 München 19(DE)**

ACTORUM AG

## Beschreibung

Die Erfindung bezieht sich auf eine Anordnung eines Lagers zwischen den sich koaxial übergreifenden Enden der Wellen einer mehrwelligen Strömungsmaschine.

Die Lagerung der Hochdruckwelle einer Turbine kann im Triebwerkbau auf verschiedene Arten erfolgen. Das zur Lagerung der Hochdruckturbinenwelle erforderliche Lager kann entweder in einem Gehäuse angeordnet sein, das zwischen Hoch- und Niederdruckturbine liegt (z.B. im "heißen" Lagerstern oder "Hot Strut"), oder es kann zwischen den Wellen von Hoch- und Niederdruckturbine als sogenanntes Zwischenwellenlager angeordnet sein. Die letztgenannte Anordnung wird häufig als Lagerungsart gewählt, um ein Lagergehäuse in der "heißen" Zone zwischen Hoch- und Niederdruckturbine zu vermeiden. Zur Anwendung kommt dann ein Lagergehäuse hinter der Niederdruckturbine, was den Vorteil aufweist, daß es im kälteren Bereich des Gasstromes liegt.

Ein solches Zwischenwellenlager ist in den bisher bekannten Triebwerken oft als "starres Lager" ausgeführt, d.h. Außen- und Innenring des Lagers sind starr mit der Hoch- und Niederdruckwelle verbunden.

Bei einer solchen starren Anordnung des Zwischenwellenlagers beeinflußt sich das Schwingverhalten von Hoch- und Niederdrucksystem gegenseitig, d.h. alle durch Unwucht- und Selbsterregung hervorgerufenen Schwingungsformen der beiden Systeme werden direkt aufeinander übertragen und es bestehen nur sehr begrenzte Möglichkeiten, beide Schwingungssysteme aufeinander abzustimmen.

Es ist also anzustreben, das Schwingungsverhalten der Rotorsysteme im positiven Sinn zu beeinflussen. Eine Möglichkeit besteht darin, durch Dämpfung der Rotorlagerung die oben genannten Schwingungsformen zu vermeiden oder zumindest zu verringern.

Aus der Literatur, z.B. Konstruktion 37 (1985 H.8, 301–308 "Kennlinien realer Quetschöldämpfer") sind squeezefilm- oder quetschölgedämpfte Lager bekannt, die so ausgeführt sind, daß ein mit Drucköl gefüllter, dämpfender Ringspalt zwischen Lagergehäuse und äußerem Lagerring gebildet und das Drucköl über Bohrungen im Gehäuse dem Ringspalt zugeführt wird.

Der Erfindung liegt die Aufgabe zugrunde, eine gut geeignete Dämpfungseinrichtung für ein gattungsgemäßes Zwischenwellenlager zu finden.

Dafür ist es erforderlich, einen ölgefüllten Dämpfungsspalt innerhalb einer Welle (Hoch- oder Niederdruckturbine) zu schaffen und diesen mit dem notwendigen Drucköl zu versorgen, um damit eine Dämpfungswirkung zu erreichen.

Aus der GB-A 937 515 sowie der US-A 3 756 672 sind gattungsgemäße Lageranordnungen zwischen sich koaxial übergreifenden Enden von Wellen einer Strömungsmaschine bekannt, die mit einem hydraulischen Tragfilm arbeiten. Diese Lager sind jedoch zum Gehäuse hin abgestützt. Ein Hinweis auf ein nicht ortsfest abgestütztes gedämpftes Lager kann diesen Druckschriften nicht entnommen werden.

Erfindungsgemäß wird die gestellte Aufgabe dadurch gelöst, daß die Anordnung mit einem in einem Dämpfungsspalt zwischen dem Lager und einer der Wellen ausgebildeten hydraulischen Tragfilm zur Dämpfung von Wellenschwingungen versehen ist und das zugeführte Tragmedium wie Öl in einer vor dem Dämpfungsspalt angeordneten, mit einer der Wellen mitrotierenden ringförmigen Kammer aufgefangen und mittels Fliehkraft in den Dämpfungsspalt gedrückt wird.

Der Hauptvorteil der Erfindung zum Stand der Technik besteht darin, eine Möglichkeit zur Erzeugung des notwendigen Hydraulikdrucks ohne Anschluß an einen gehäuseseitigen Druckölkreislauf aufzuzeigen und damit ein hydraulisch gedämpftes Zwischenwellenlager praktisch einsetzbar zu machen.

Ausführungsbeispiele der Erfindung und ihre weiteren Ausbildungen werden nachfolgend anhand der beigefügten Zeichnungen beschrieben.

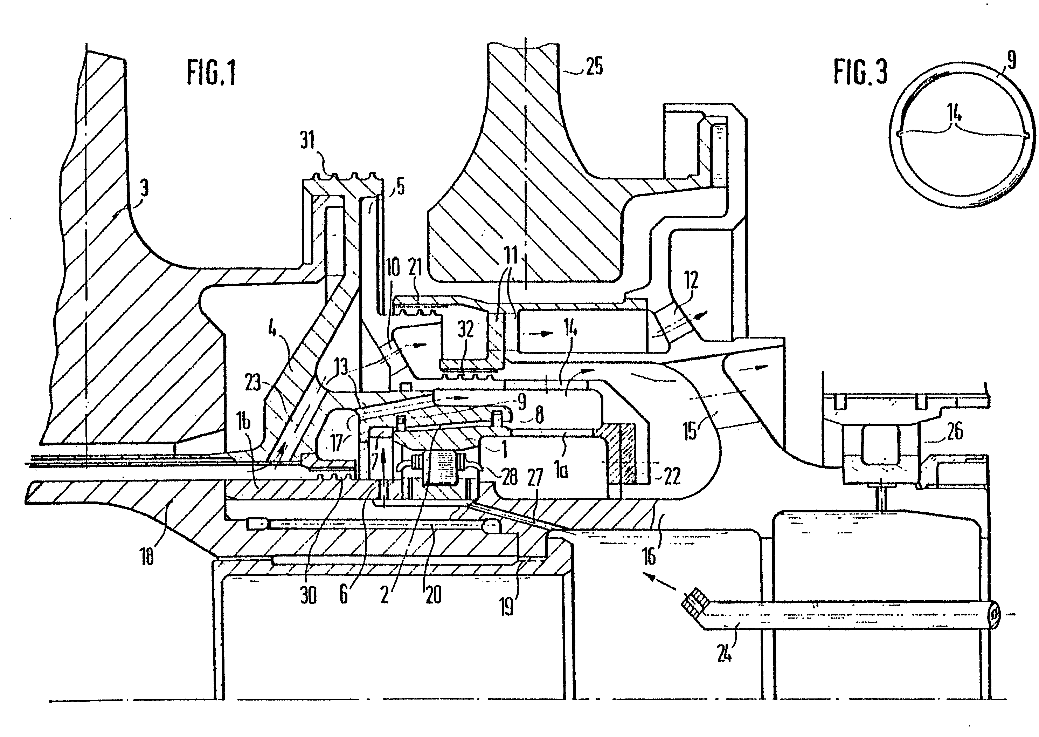

Abb. 1 zeigt ein sogenanntes Squirrelcage-Lager, welches an einem Hochdruckteil einer Turbine angebracht ist. Der für das tragfilmgedämpfte Squirrelcage-Lager 1 notwendige Ölspalt 2 wird durch den an die Hochdruckturbine 3 angeflanschten Konus 4 und durch den Außenring des Squirrelcage-Lagers 1 gebildet, der durch den ebenfalls an die Hochdruckturbine 3 angeflanschten Ring 5 gehalten wird.

Das für die Dämpfung erforderliche Öl wird über die Bohrung 6 zugeführt und in dem durch die Lippe 17 und das Lager 1 gebildeten Raum 7 gefangen. Da dem rotierenden System kein Drucköl zugeführt werden kann, wird der erforderliche Öldruck durch die aus der mit Hochdruckturbinendrehzahl rotierenden Hochdruckwelle resultierende Fliehkraft erzeugt. Der Dämpfungsspalt 2 ist in der Regel zylindrisch. Der Öldurchfluß durch den Dämpfungsspalt 2 kann aber unter Zuhilfenahme der Fliehkraft erhöht werden, wenn dieser leicht konisch ausgeführt wird. Der erforderliche Öldruck wird durch die Verwendung von zwei an den Enden des Dämpfungsspaltes 2 befindlichen Dichtungsringen 8 und 9 gesteuert. Zur Zufuhr des Öles in den Spalt 2 enthält der Dichtungsring 9 Öffnungen 25 (siehe Abb. 3). Die Steuerung der Dämpfungscharakteristik kann durch entsprechende Tolerierung des hinteren Dichtungsringes 8 oder durch zusätzliche Öffnungen in diesem erfolgen. Möglich ist auch nur die Verwendung des aus dem Lager kommenden Schmieröls.

Die Bohrungen 23, 10, 11 und 12 dienen zur Umspülung der Lagerkammer mit Kühlluft, die Bohrungen 13, 14 und 15 als Ölrücklauf.

Dem Lager selbst wird das Öl über eine Düse 24 und von dort durch die im Niederdruckwellenkonus 16 befindlichen Bohrungen 27 zugeführt. Niederdruckwelle 18 und Niederdruckwellenkonus 16 werden über eine Mutter 19 zusammengehalten und verspannt. Die Drehmomentübertragung erfolgt über die Verzahnung 20.

Der Labyrinthring 21 ist am Niederdruckwellenkonus 16 angeflanscht. Die gewählte Dicke der Abstandsscheibe 22 dient zur Einstellung des Dämpfungsspaltes 2, wenn dieser konisch ausgeführt wird. Auch andere Mittel wie Feingewinde o.ä. können zur Einstellung verwendet werden. Mit 26 ist ein weiteres Lager bezeichnet.

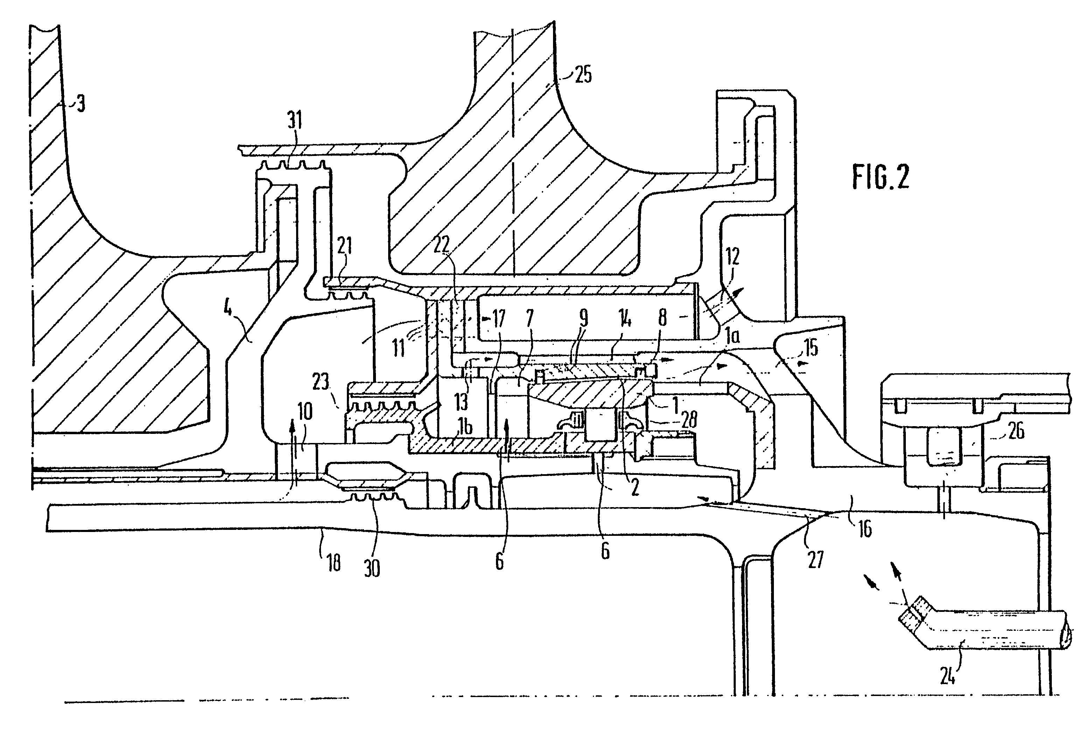

Abb. 2 zeigt das am Konus der Niederdruckturbinenwelle 16 angebrachte Lager 1 mit Squirrelcage 28 für die Niederdruckscheibe 25.

Die Ölversorgung des Dämpfungsspaltes 2 wird durch die Fliehkraft des rotierenden Niederdrucksystems bewirkt und erfolgt über die Bohrung 6, oder nur mit vom Lager kommenden Schmieröl. Der Druckaufbau erfolgt in dem durch Lippe 17 und Lager 1 gebildeten Fangraum 7.

Der Ölrücklauf erfolgt über die Bohrung 13, über die am Dichtringträger 9 angeordneten Schlitze 14 und über die Bohrungen 15. Der Kreislauf wird geschlossen durch die Düse 24, durch welche das Öl zugeführt wird.

Die Bohrungen 10, 11 und 12 dienen zur Umspülung der Lagerkammer des Lagers 1 mit Kühlluft.

Der Labyrinthring 21 ist am Konus 16 der Niederdruckturbinenwelle angeflanscht, weitere Labyrinthringe sind mit 29, 30, 31 und 32 bezeichnet.

Die Ölzufuhr zum Lager 1 zwischen den Teilen 1a, 1b erfolgt über die Düse 24 zur hohlen Welle 16 und durch die am Konus der Niederdruckturbinenwelle 16 befindlichen Bohrungen 27 und die in der Hochdruckturbinenwelle 4 angebrachten Bohrungen 6.

## Patentansprüche

1. Anordnung eines Lagers (1) zwischen den sich koaxial übergreifenden Enden der Wellen (4, 16) einer mehrwelligen Strömungsmaschine, dadurch gekennzeichnet, daß die Anordnung mit einem in einem Dämpfungsspalt (2) zwischen dem Lager (1) und einer der Wellen (4, 16) ausgebildeten hydraulischen Tragfilm zur Dämpfung von Wellenschwingungen versehen ist und das zugeführte Tragmedium wie Öl in einer vor dem Dämpfungsspalt (2) angeordneten, mit einer der Wellen (4, 16) mitrotierenden ringförmigen Kammer (7) aufgefangen und mittels Fliehkraft in den Dämpfungsspalt (2) gedrückt wird.

2. Lageranordnung nach Anspruch 1, dadurch gekennzeichnet, daß das Trag- bzw. Dämpfungsmedium wie Öl durch die Niederdruckwelle (16) zugeführt wird.

3. Lageranordnung nach Anspruch 1, dadurch gekennzeichnet, daß die Menge des durch den Dämpfungsspalt (2) geführten Tragmediums durch eine Anordnung von Dichtungsringen (8, 9) einstellbar ist.

4. Lageranordnung nach Anspruch 1 bis 3, dadurch gekennzeichnet, daß der den Dämpfungsspalt (2) begrenzende Lagerring (1a) als Squirrelcage ausgebildet ist.

5. Lageranordnung nach Anspruch 1 bis 4, dadurch gekennzeichnet, daß der Dämpfungsspalt (2) durch zwei konische Teile ausgebildet ist.

6. Lageranordnung nach Anspruch 5, dadurch gekennzeichnet, daß die Breite des Dämpfungsspaltes (2) mittels axialer Verschiebung eines konischen Teiles einstellbar ist.

7. Lageranordnung nach einem der vorhergehenden Ansprüche, dadurch gekennzeichnet, daß das Zwischenwellenlager von einem Kühlmantel (10, 11, 12) umgeben ist.

8. Lageranordnung nach Anspruch 3, dadurch gekennzeichnet, daß die Mengensteuerung zur Ausbildung eines Tragfilms im Dämpfungsspalt (2) durch in beiden Dichtungsringen (8, 9) unterschiedlich erfolgt.

9. Lageranordnung nach Anspruch 3, dadurch gekennzeichnet, daß die Mengensteuerung durch geeignete große Öffnungen (Aussparungen 14) in den Dichtungsringen erfolgt.

## Claims

1. An arrangement comprising a bearing (1) between the coaxially overlapping ends of the shafts (4, 16) of a multiple-shaft turbine, characterised in that the arrangement comprises, for damping shaft oscillations, a hydraulic bearing film which is formed in a damping gap (2) between the bearing (1) and one of the shafts (4, 16), the bearing medium supplied, such as oil, being caught in an annular chamber (7) disposed upstream of the damping gap (2) and corotating with one of the shafts (4, 16), being forced into the damping gap (2) by centrifugal force.

2. A bearing arrangement according to Claim 1, characterised in that the bearing or damping medium such as oil is supplied through the low-pressure shaft (16).

3. A bearing arrangement according to Claim 1, characterised in that the quantity of bearing medium passed through the damping gap (2) can be adjusted by an arrangement of packing rings (8, 9).

4. A bearing arrangement according to Claim 1 to 3, characterised in that the bearing ring (1a) defining the damping gap (2) is constructed as a squirrel cage.

5. A bearing arrangement according to Claim 1 to 4, characterised in that the damping gap (2) is formed by two conical members.

6. A bearing arrangement according to Claim 5, characterised in that the width of the damping gap (2) can be adjusted by axial displacement of one conical member.

7. A bearing arrangement according to one of the preceding Claims, characterised in that the intermediate shaft bearing is enclosed by a cooling shell (10, 11, 12).

8. A bearing arrangement according to Claim 3, characterised in that control of the quantity of bearing film used in the damping gap (2) is differently controlled in the two packing rings (8, 9).

9. A bearing arrangement according to Claim 3, characterised in that control of the quantity is effected by having suitably sized openings (recesses 14) in the packing rings.

## Revendications

1. Disposition d'un palier (1) entre les extrémités d'arbre (4, 16) en prise coaxialement d'une turbomachine à plusieurs arbres, caractérisée en ce que le dispositif est muni d'un film porteur hydraulique entre le palier (1) et l'un des arbres (4, 16) pour amortir les vibrations de l'arbre et que le milieu porteur introduit, tel que de l'huile est retenu dans une chambre annulaire (7) tournant avec l'un des arbres (4, 16) disposée en avant de la fente d'amortissement et qui est comprimée dans la fente d'amortissement (2) à l'aide de la force centrifuge.

2. Disposition de palier selon la revendication 1, caractérisée en ce que le milieu porteur ou d'amortissement tel que de l'huile est introduit par l'arbre basse pression (16).

3. Disposition de palier selon la revendication 1, caractérisée en ce que la quantité de milieu porteur introduit par la fente d'amortissement (2) est réglable grâce à un dispositif de joints d'étanchéité (8, 9).

4. Disposition de palier selon les revendications 1 à 3, caractérisée en ce que la bague de palier (1a) limitant la fente d'amortissement (2) est exécutée en cage d'écureuil.

5. Disposition de palier selon les revendications 1 à 4, caractérisée en ce que la fente d'amortissement (2) est réalisée par deux parties coniques.

6. Disposition de palier selon la revendication 5, caractérisée en ce que la largeur de la fente d'amortissement (2) est réglable au moyen du déplacement axial d'une pièce conique.

7. Disposition de palier selon l'une quelconque des revendications précédentes, caractérisée en ce que le palier d'arbre intermédiaire est entouré d'une enveloppe de refroidissement (10, 11, 12).

8. Disposition de palier selon la revendication 3, caractérisée en ce que la régulation de la dose, pour former un film porteur dans la fente d'amortissement (2), est obtenue grâce à des ouvertures ménagées de manière différente dans les deux joints annulaires (8, 9).

9. Disposition de palier selon la revendication 3, caractérisée en ce que la régulation de quantité a lieu grâce à des ouvertures de taille appropriée (évidement 14) dans les joints annulaires.

FIG.1

FIG.3

31

5

3

25

9

14

4

23

16

18

10 21

13

32

11

14

12

17

7

9

8

15

1

1a

22

28 27

30 6 2 20

19

16

26

24

EP 0 214 481 B1

FIG.2

EP 0 214 481 B1